# EUROPEAN PATENT APPLICATION

(11) **EP 0 558 759 A1**
(43) Date of publication of application: **08.09.1993**
(21) Application number: 92920001.2
(22) Date of filing: 18.09.1992
(51) Int. Cl.: G01N 22/04

(54) **EQUIPMENT FOR MEASURING PHYSICAL QUANTITY**

(30) Priority: 20.09.1991 JP 270255/91; 20.09.1991 JP 270256/91; 20.09.1991 JP 270257/91
(71) Applicant: DIPOLE ELECTRONICS CO. LTD., Tokyo 167 (JP); HIUGAGIKEN CORPORATION, Odawara-shi, Kanagawa 250 (JP)
(72) Inventor: MAENO, Yorihiko, Suginami-ku Tokyo 167 (JP)
(74) Representative: Flint, Adam
(86) International application number: JP9201187
(87) International publication number: WO9306468

(57) **Abstract**

A saw-tooth oscillator (2) generates a saw-tooth wave and a voltage controlled oscillator (3) generates a microwave the frequency of which changes in accordance with the waveform of this saw-tooth input voltage. This microwave is applied through an isolator (4) and a distributor (5) to a plurality of microwave cavity resonators (6) equipped with reception antenna (14) and transmission antenna (13). The natural frequencies of these microwave cavity resonators (6) are 100 MHz different from one another, and they are disposed equidistantly in a direction crossing transversely an object to be measured, such as a paper pulp. The microwave outputs of the microwave cavity resonators (6) are coupled by a coupler (7) and the coupled output is detected by one microwave detector (8). The detected signal is converted to a digital signal by an A/D convertor (9) and is applied to a microprocessor (10). Physical quantities of the object to be measured, such as a water content, a weight, etc., at the measuring portion are calculated from the resonance frequency and peak value of each resonance curve. According to this measuring equipment, the detector need not be disposed for each microwave cavity resonator and the adjustment between the detectors is not necessary, either.

## Description

### [Technical Field]

The present invention relates to a physical quantity measuring apparatus comprising a plurality of microwave cavity oscillators which enables the simultaneous and spontaneous measurements of physical quantities of objects to be measured in a wide range, and which needs only one voltage-controlled microwave oscillator and one microwave detector.

### [Background Art]

For example, in case of paper production pulp material of 6 m in width moves at the speed of 1,000 m/minute. In order to obtain paper with uniform quality, it is necessary to measure always moisture quantity and basis weight (weight per unit volume) of the pulp material in a wide range and to feed back immediately the measured results to the pulp producing apparatus for adjusting the composition of the pulp material. A conventional paper producing apparatus is provided with only one measuring apparatus which moves in the direction of the whole width of the pulp material for measuring its physical quantities. Several 1,000 m of the pulp material is passed while the measuring apparatus transverses from one side to the other side of the pulp material. Therefore almost all the region of the pulp material does not pass under the measuring apparatus so that those area remain unmeasured. Because of this large movement of the pulp the spontaneous measurements of physical quantities such as the moisture quantity and the unit weight over a wide range is impossible. The applicant of this application solved such problem by a physical quantity measuring apparatus in which a plurality of microwave cavity oscillators are arranged in a line so that simultaneous measurements of various regions without is possible movement of the measuring apparatus, which is disclosed in Japanese Patent Laid-open Publication No. 62-169041.

### [Disclosure of the Invention]

Although the invention of Japanese Laid-open Publication No. 62-169041 enables the simultaneous and spontaneous measurements of physical quantities in a wide area, it has drawbacks that the price of the apparatus is high and that it needs troublesome adjustments of sensitivity between detectors since a detector must be provided for every microwave cavity oscillator.

The object of the present invention is to provide a physical quantity measuring apparatus without the above drawbacks.

The physical quantity measuring apparatus in any example of the invention needs only one microwave detector, so that the price of the apparatus becomes low and sensitivity adjustment between detectors becomes unnecessary.
The first embodiment of the invention relates to a physical quantity measuring apparatus comprising: a sawtooth oscillator; a voltage-controlled microwave oscillator controlled by sawtooth voltage generated by the sawtooth oscillator; a divider for dividing microwaves generated by the microwave oscillator; a plurality of microwave cavity resonators in which each microwave supplied from the divider resonates in response to the respective physical quantities of each region of object to be measured, and respective resonant frequencies of which are differentiated; a coupler for coupling every microwave output of a plurality of the microwave cavity resonators; a microwave detector for detecting output of the coupler; and a processor for processing output of the microwave detector so as to obtain physical quantities corresponding to the region of the object to be measured.

Since respective resonant frequencies of each microwave cavity resonators arranged at each region to be measured of the object are differentiated, it is possible to measure independently each resonant characteristic every resonant frequency of each microwave cavity resonator during one time of scan, in spite of the fact that the coupler combines outputs of each microwave cavity resonator resonating in accordance with physical quantities of each region to be measured. Therefore the physical quantity measuring apparatus of the first embodiment enables instantaneous measurements of physical quantities at each region to be measured of the object in a wide range.

The second embodiment of the invention relates to a physical quantity measuring apparatus comprising: a sawtooth oscillator; a voltage-controlled microwave oscillator controlled by sawtooth voltage generated by the sawtooth oscillator; a divider for dividing microwaves generated by the microwave oscillator; a plurality of cylindrical members with an open end and a protrusion at the center thereof which are arranged in a plane such that said open end is respectively faced to each region to be measured of the one side of the object to be measured, wherein each microwave obtained from the divider is provided to each of said member and each resonant frequency of the microwave cavity is differentiated; a coupler for coupling every microwave output of a plurality of the microwave cavity resonators; a microwave detector for detecting output of the coupler; and a processor for processing output of the microwave detector so as to obtain physical quantities corresponding to the region of the object to be measured.

Since each cylindrical member of microwave cavity resonators used in the second embodiment has a protrusion at its center, the electric field of microwaves concentrates to the region corresponding to the protrusion. Thus it enables the accurate measurements of physical quantities at the localized region of the object to be measured with superior sensitivity.

Since respective microwave cavity resonators consist of one cylindrical member, the physical quantity measuring apparatus of the second embodiment is cheaper and more compact than one in which each microwave cavity resonator consists of two cylindrical members.

The third embodiment of the invention relates to a physical quantity measuring apparatus comprising: a sawtooth oscillator; a voltage-controlled microwave oscillator controlled by sawtooth voltage generated by the sawtooth oscillator; a divider for dividing microwaves generated by the microwave oscillator; a plurality of a pair of cylindrical members with an open end and a protrusion at the center thereof in which both cylindrical members of respective pairs are arranged at both sides of object to be measured in such a way that both open ends thereof are opposed, and each microwave supplied from the divider is provided to respective cylindrical members resonant frequencies of which are differentiated; a coupler for coupling every microwave output of a plurality of the microwave cavity resonators; a microwave detector for detecting output of the coupler; and a processor for processing output of the microwave detector so as to obtain physical quantities corresponding to the region of the object to be measured.

Since each cylindrical member of microwave cavity resonators used in the third embodiment has a protrusion at its center, the electric field of microwaves concentrates to the region corresponding to the protrusion. Thus the physical quantity measuring apparatus enables the accurate measurements of physical quantities at the localized region of the object to be measured with superior sensitivity.

Since respective microwave cavity resonators consist of two cylindrical members, the physical quantity measuring apparatus of the second embodiment has high sensitivity compared with one in which each microwave cavity resonator consists of one cylindrical member.

The fourth embodiment of the invention relates to a physical quantity measuring apparatus comprising: a sawtooth oscillator; a voltage-controlled microwave oscillator controlled by sawtooth voltage generated by the sawtooth oscillator; a divider for distributing microwaves generated by the microwave oscillator; a plurality of cylindrical members with an open end and a protrusion at the center thereof in which respective cylindrical members and a metal plate are arranged at both sides of object to be measured, and respective cylindrical members is provided with each microwave supplied from the divider, and resonant frequencies of which are differentiated; a coupler for coupling every microwave output of a plurality of the microwave cavity resonators; a microwave detector for detecting output of the coupler; and a processor for processing output of the microwave detector so as to obtain physical quantities corresponding to the region of the object to be measured.

Since each cylindrical member of microwave cavity resonators used in the fourth embodiment has a protrusion at its center, the electric field of microwaves concentrates to the region corresponding to the protrusion. Thus the physical quantity measuring apparatus enables that physical quantities at the localized region of the object to be measured are accurately measured with superior sensitivity.

Since respective microwave cavity resonators consist of a cylindrical member and a metal plate, the physical quantity measuring apparatus of the fourth embodiment does not need to adjust location of upper and lower cylindrical members as in case of the third embodiment in which each microwave cavity resonator consists of two cylindrical members, and has high sensitivity compared with one of the second embodiment in which each microwave cavity resonator consists of two cylindrical members.

In the second through fourth embodiments of microwave cavity resonators, an easy and reliable way of differentiating respective resonant frequencies is to differentiate respective depths from the opening to the base of the cylindrical members.

### [Brief Description of the Drawings]

Fig. 1 shows a system diagram of the first through fourth examples of the physical quantity measuring apparatus of the invention.

Fig. 2 shows the results of physical quantity measured by the physical quantity measuring apparatus of the invention.

Fig. 3 shows the microwave cavity resonator in the second example of the invention.

Fig. 4 shows the microwave cavity resonator in the third example of the invention.

Fig. 5 shows the microwave cavity resonator in the fourth example of the invention.

### [Detailed Description of the Invention]

The physical quantity measuring apparatus of the invention will be explained further with attached figures.

### Example 1

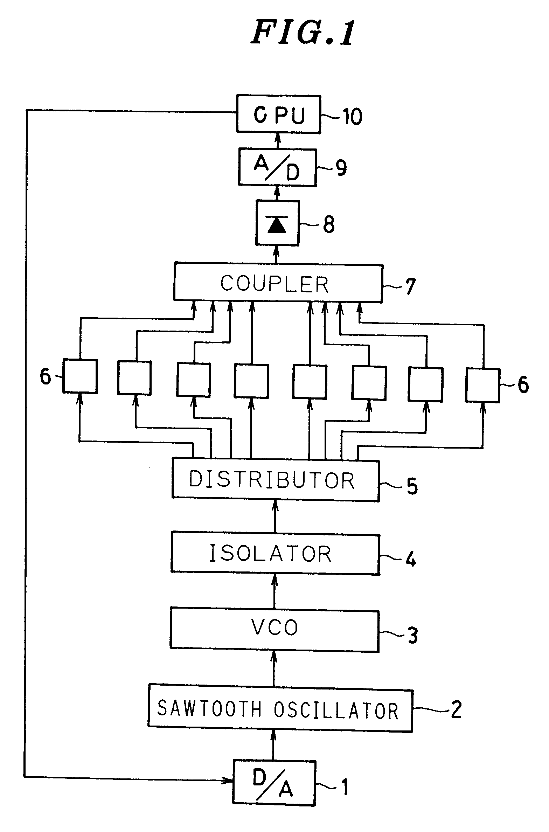

The first example of the physical quantity measuring apparatus of the invention will be explained with Figs. 1, 3, 4, and 5.

The measuring apparatus comprises a D/A converter 1, a sawtooth oscillator 2, a voltage-controlled microwave an oscillator 3, an isolator 4, a divider 5, microwave cavity resonators 6, a coupler 7, a microwave detector 8, an A/D converter 9, and a micro processor 10.

The sawtooth oscillator 2 generates sawtooth waves varying from 0V to 35V with period of 1KHz in response to analog signals converted from digital signals which are supplied from the micro processor 10, by means of the D/A convertor 1. In response to the wave shape of the sawtooth waves, the voltage-controlled oscillator 3 generates microwaves varying continuously from 2.5 to 3.5 GHz. The microwaves are provided to the divider 5 through the isolator 4 and then divided to eight parts each of which covers 100 MHz. The isolator 4 is inserted for preventing the voltage-controlled oscillator 3 from being damaged by microwaves reflected by microwave cavity resonators 6 followed.

The resonant frequencies of eight microwave cavity resonators 6 are subsequently differentiated by 100MHz as 2.5 GHz, 2.6 GHz ... 3.2 GHz, and those resonators 6 are arranged in the direction of width of the object to be measured, e.g. pulp material, at same intervals. Each microwave cavity resonator 6 is provided with a receiving antenna 14 for receiving microwaves transmitted from the divider 5 and a transmitting antenna 13 connected to the coupler 7. Each microwave cavity resonator 6 resonates at a frequency deviated from the resonant frequency by amount corresponding to the physical quantities at the region to be measured of the object. Since the resonant frequency and peak value in the resonant state whose frequency is shifted depend on the moisture quantity and basis weight (weight per unit volume) of the measured region of the object, measured values of the resonant frequency and peak value in the resonant curve can provide the physical quantities such as the moisture quantity and basis weight of the measured region in the object. Japanese Patent Laid-open Publication No. 62-238447 whose applicant is one of the present application may be referred for further details. It should be noted that the resonant frequency of the microwave cavity resonator 6 must be separated from one of the adjacent resonator 6 to such a degree that the resonant curve shifted from the original one due to the physical quantities of the measured region does not essentially overlap one of the adjacent microwave cavity resonator 6.

The outputs of eight microwave cavity resonators 6 combined by coupler 7 are detected by one microwave detector 8. A crystal diode or Schottky diode may be employed for the microwave detector 8. Signals detected by the microwave detector 8 are converted to digital signals with the A/D converter 9 and then provided to the micro processor 10 by which the physical quantities such as the moisture quantity and basis weight of the measured region are calculated from the resonant frequency and peak value in each resonant curve. The micro processor 10 may supply the D/A convertor with signals for driving the sawtooth oscillator 2.

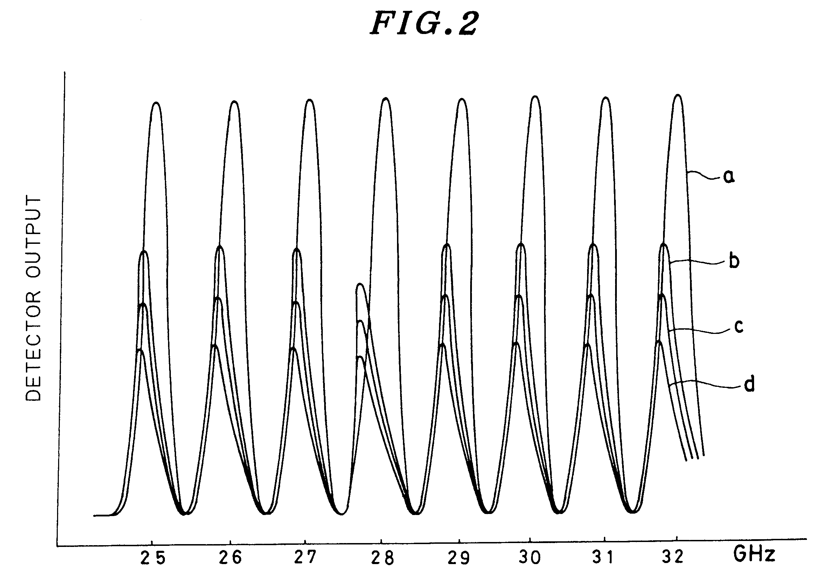

Fig. 2 shows an example of measurement results on paper by the physical quantity measuring apparatus of the invention. Curve a shows the original resonant state in which the pulp material is not placed. In this state each microwave cavity resonator 6 respectively resonates at resonant frequencies, 2.5 GHz, 2.6 GHz ... 3.2 GHz, as shown in curve a. Curve b shows a resonant curve in case of paper of a definite thickness being placed, in which each resonant frequency of the resonant curve is shifted toward low frequency from the original resonant frequency and each peak value is decreased from that of curve a. Curves c and d show measurement results in which thicker paper than one in case of curve b is measured. From these shifting amounts of resonant frequencies and peak values, moisture quantity and basis weight of the region facing to each microwave cavity resonator can be obtained.

The voltage-controlled oscillator 3 generates microwaves varying continuously from 2.5 GHz to 3.5 GHz in response to a sawtooth wave varying from 0 to 35 V. During every this scanning period, microwaves are provided to eight microwave cavity resonators arranged in line at same intervals across the paper, so that eight resonant curves of the microwave cavity resonators modified due to the paper are obtained. That is to say, eight physical quantities of the paper at the region corresponding to each location of eight microwave cavity resonators are obtained. Since the sawtooth waves are generated at the high frequency of 1 KHz, the moisture quantity and basis weight of the object to be measured can be measured for eight measuring regions essentially at the same time.

In Fig.2 at resonant frequency 2.8 GHz the attenuation of peak values and the shifted amounts of frequencies in curves b, c, d are greater than those at other frequencies. It shows that the moisture quantity (or basis weight) of the region corresponding to the fourth microwave cavity resonator from the left is greater than that in other regions.

### Example 2

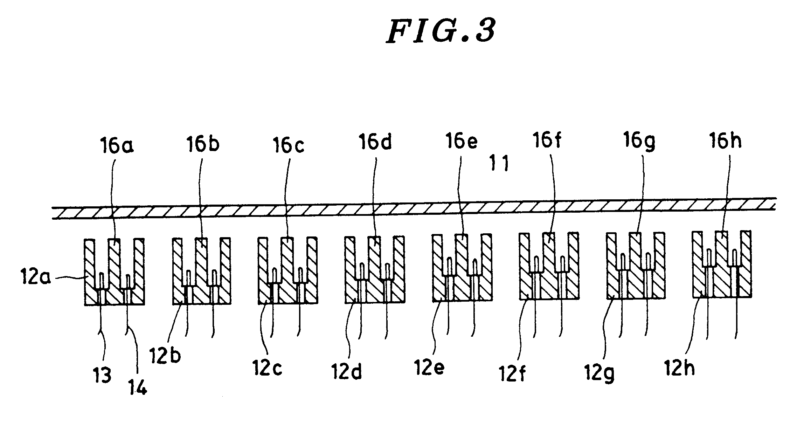

In this second example shown in Fig. 3, each microwave cavity resonator comprises only cylindrical member 12 placed at one side of the object 11 to be measured. The cylindrical members 12a, ... 12h are respectively provided with protrusions 16a, ... 16h at its respective center, with receiving antenna 13 for introducing microwaves transmitted from the divider 5 into the inside of the member, with the transmitting antenna 14 for transmitting the characteristics of microwaves corresponding to the physical quantities of each region of the object 11 on its base of the member. The inside diameter of each cylindrical member is 20 mm, and the inside depth of the cylindrical member 12a is 25 mm, one of cylindrical member 12b which is 1 mm shorter than the cylindrical member 12a is 24 mm, and one of the cylindrical member 12h is designed as 18 mm. Decreasing the depth by 1 mm between adjoined cylindrical members in this way enables to differentiate sequentially the resonant frequencies by 100 MHz between adjoined cylindrical members like cylindrical member 12a - 2.5 GHz, cylindrical member 12b - 2.6 GHz, and cylindrical member 12h - 3.2 GHz. Since these cylindrical members constitute a coaxial resonator, the dimensions of the inside diameter in the cylindrical member and of the diameter of the protrusion in the center are arbitrary. Therefore when the diameter of cylindrical members is decreased, the distance between measuring points can be essentially smaller than 10 mm.

In the second example of the invention each microwave cavity resonator consists of only one cylindrical member 12a, ... 12h arranged in line at one side of the object 11 to be measured, so that the system of the physical quantity measuring apparatus becomes simpler than one in other examples in which each microwave cavity resonator consists of two cylindrical members or of one cylindrical member and one metal plate. Therefore the cost of the whole measuring system becomes low. In addition the second example does not need any adjustment for the relative distance between a pair of cylindrical members which is necessary for the measuring apparatus in which they are placed at both sides of the object to be measured. Furthermore it is possible to make the distance between measuring points less than 10mm by decreasing the diameter of the cylindrical members.

### Example 3

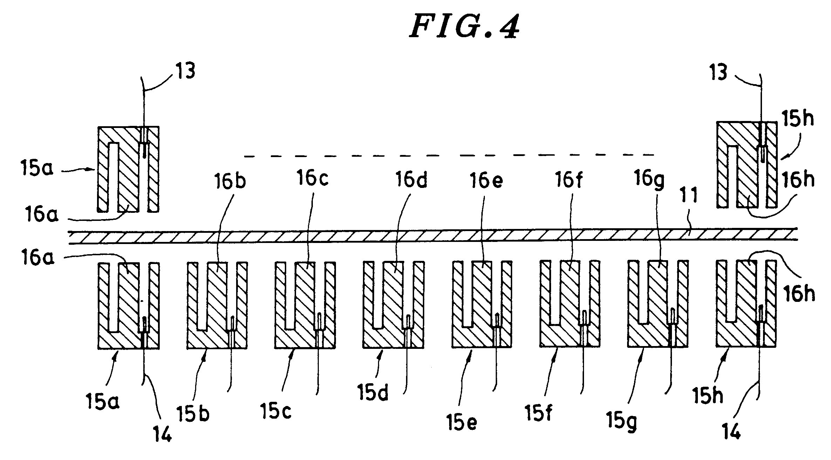

Fig.4 shows the third example of the invention in which each microwave cavity resonator consists of two identical cylindrical members 15a, ... 15h which are placed at both sides of the object 11 to be measured. Cylindrical members 15a, ... 15h are respectively provided with protrusions 16a, ... 16h at its respective center, and with receiving antenna 13 for introducing microwaves transmitted from the divider 5 into the inside, as well as with the transmitting antenna 14 for transmitting the characteristics of microwaves corresponding to the physical quantities of each region of the object 11 on its base of the cylindrical members. The inside diameter of each cylindrical member is 20 mm, and the inside depth of the cylindrical member 15a is 35 mm, one of cylindrical member 15b which is 0.5 mm shorter than the cylindrical member 15a is 34.5 mm, and one of the cylindrical member 15h is designed as 31.5 mm. Decreasing the depth by 0.5 mm (1 mm in total for a pair of cylindrical members) between adjoined cylindrical members in this way enables to differentiate subsequently the resonant frequencies by 100 MHz between the adjoined cylindrical members, like cylindrical member 15a - 2.5GHz, cylindrical member 15b - 2.6 GHz,and cylindrical member 15h - 3.2 GHz.

Each microwave cavity resonator of the physical quantity measuring apparatus in the third example consists of a pair of cylindrical members, so that the sensitivity of such apparatus is superior to one in the second example in which each microwave cavity resonator consists of one cylindrical member.

### Example 4

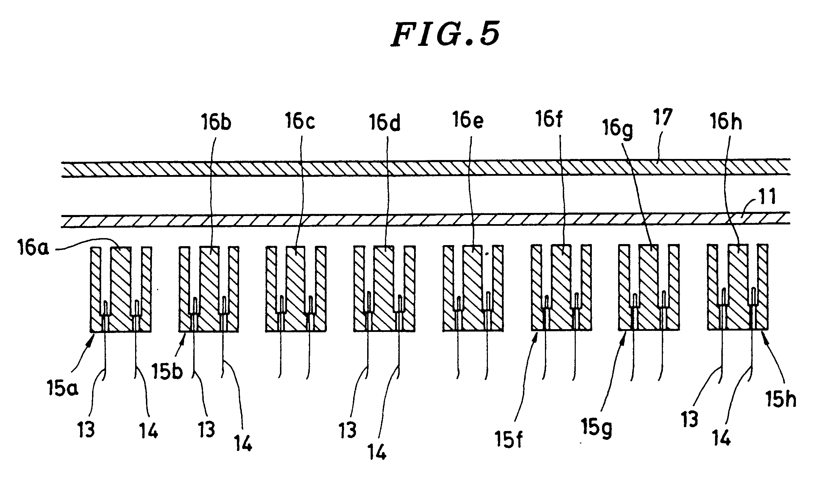

Fig.5 shows the third example of the invention in which each microwave cavity resonator consists of a metal plate 17 placed one side of the object 11 to be measured and cylindrical members 15a, ... 15h which are placed at the other side of the object 11 to be measured. Cylindrical members 15a, ... 15h are respectively provided with protrusions 16a, ... 16h at its respective center, and with receiving antenna 13 for introducing microwaves from the divider 5 into the inside of the cylindrical member, as well as with the transmitting antenna 14 for transmitting the characteristic of microwaves corresponding to the physical quantities of each region on its base of the cylindrical members. The inside diameter of each cylindrical member is 20 mm, and the inside depth of the cylindrical member 15a is 35 mm, one of cylindrical member 15b which is 0.5 mm shorter than the cylindrical member 15a is 34.5 mm, and one of the cylindrical member 15h is designed as 31.5 mm. Decreasing the depth by 0.5 mm between adjoined cylindrical members in this way enables to differentiate subsequently the resonant frequencies by 100 MHz between the adjoined cylindrical members, like cylindrical member 15a - 2.5 GHz, cylindrical member 15b - 2.6 GHz, cylindrical member 15h - 3.2 GHz.

Each microwave cavity resonator of the physical quantity measuring apparatus in the fourth example consists of the metal plate 17 and cylindrical members with protrusion 16 in the center, so that there is no need to adjust the relative location which is necessary for the physical quantity apparatus in which the microwave cavity resonator consists of a pair of cylindrical members. In addition the sensitivity of such apparatus is superior to one in the second example in which each microwave cavity resonator consists of one cylindrical member.

### [Industrial Applicability]

As explained above, the physical quantity measuring apparatus of the invention is suitable for measuring physical quantities, for example, of pulp material in paper manufacturing.

## Claims

1. A physical quantity measuring apparatus comprising:
a sawtooth oscillator;
a voltage-controlled microwave oscillator controlled by sawtooth voltage generated by the sawtooth oscillator;
a divider for dividing microwaves generated by the microwave oscillator;
a plurality of microwave cavity resonators in which each microwave supplied from the divider resonates in response to the respective physical quantities of each region of object to be measured, and respective resonant frequencies of which are differentiated;
a coupler for coupling every microwave output of a plurality of the microwave cavity resonators;
a microwave detector for detecting output of the coupler; and
a processor for processing output of the microwave detector so as to obtain physical quantities corresponding to the region of the object to be measured.

2. A physical quantity measuring apparatus comprising:
a sawtooth oscillator;
a voltage-controlled microwave oscillator controlled by sawtooth voltage generated by the sawtooth osciliator;
a divider for dividing microwaves generated by the microwave oscillator;
a plurality of cylindrical members with an open end and a protrusion at the center thereof which are arranged in a plane such that said open end is respectively faced to each region to be measured of the one side of the object to be measured, wherein each microwave obtained from the divider is provided to each of said member and each resonant frequency of the microwave cavity is differentiated;
a coupler for coupling every microwave output of a plurality of the microwave cavity resonators;
a microwave detector for detecting output of the coupler; and
a processor for processing output of the microwave detector so as to obtain physical quantities corresponding to the region of the object to be measured.

3. A physical quantity measuring apparatus as claimed in claim 2 characterized in that depths from the open end to the base in respective cylindrical members are differentiated so that respective resonant frequencies of the microwave cavity oscillators are differentiated.

4. A physical quantity measuring apparatus as claimed in claim 2 characterized in that the cylindrical member is a coaxial resonator.

5. A physical quantity measuring apparatus comprising:
a sawtooth oscillator;
a voltage-controlled microwave oscillator controlled by sawtooth voltage generated by the sawtooth oscillator;
a divider for dividing microwaves generated by the microwave oscillator;
a plurality of a pair of cylindrical members with an open end and a protrusion at the center thereof in which both cylindrical members of respective pairs are arranged at both sides of object to be measured in such a way that both open ends thereof are opposed, and each microwave supplied from the divider is provided to respective cylindrical members resonant frequencies of which are differentiated;
a coupler for coupling every microwave output of a plurality of the microwave cavity resonators;
a microwave detector for detecting output of the coupler; and
a processor for processing output of the microwave detector so as to obtain physical quantities corresponding to the region of the object to be measured.

6. A physical quantity measuring apparatus as claimed in claim 5 characterized in that depths from the open end to the base in respective cylindrical members are differentiated so that respective resonant frequencies of the microwave cavity oscillators are differentiated.

7. A physical quantity measuring apparatus as claimed in claim 5 characterized in that the cylindrical member is a coaxial resonator.

8. A physical quantity measuring apparatus comprising:
a sawtooth oscillator;
a voltage-controlled microwave oscillator controlled by sawtooth voltage generated by the sawtooth oscillator;
a divider for distributing microwaves generated by the microwave oscillator;
a plurality of cylindrical members with an open end and a protrusion at the center thereof in which respective cylindrical members and a metal plate are arranged at both sides of object to be measured, and respective cylindrical members is provided with each microwave supplied from the divider, and resonant frequencies of which are differentiated;
a coupler for coupling every microwave output of a plurality of the microwave cavity resonators;
a microwave detector for detecting output of the coupler; and
a processor for processing output of the microwave detector so as to obtain physical quantities corresponding to the region of the object to be measured.

9. A physical quantity measuring apparatus as claimed in claim 8 characterized in that depths from the open end to the base in respective cylindrical members are differentiated so that respective resonant frequencies of the microwave cavity oscillators are differentiated.

10. A physical quantity measuring apparatus as claimed in claim 8 characterized in that the cylindrical member is a coaxial resonator.
